# EUROPÄISCHE PATENTSCHRIFT

(11) **EP 1 819 944 B1**
(45) Veröffentlichungstag und Bekanntmachung des Hinweises auf die Patenterteilung: **27.07.2011**
(21) Anmeldenummer: 05801745.0
(22) Anmeldetag: 08.11.2005
(51) Int. Cl.: F16H 7/12

(54) **SPANNVORRICHTUNG FÜR EINEN ZUGMITTELTRIEB**
TENSIONING DEVICE FOR A BELT DRIVE
DISPOSITIF TENDEUR POUR UN ENTRAINEMENT PAR ELEMENT DE TRACTION

(30) Priorität: 07.12.2004 DE 102004058770
(43) Veröffentlichungstag der Anmeldung: 22.08.2007
(73) Patentinhaber: Schaeffler Technologies GmbH & Co. KG, 91074 Herzogenaurach (DE)
(72) Erfinder: HARTMANN, Bernd, 91085 Weisendorf (DE)
(86) Internationale Anmeldenummer: PCT/EP2005/011897
(87) Internationale Veröffentlichungsnummer: WO 2006/061070

(56) Entgegenhaltungen:
- DE-C1- 4 039 815
- FR-A- 2 781 008
- GB-A- 1 205 368
- US-A- 2 368 848
- US-A- 2 806 382
- US-A- 3 383 933
- US-A- 3 479 894
- US-A- 4 773 892
- US-A- 5 026 330
- US-A- 6 036 612
- PATENT ABSTRACTS OF JAPAN Bd. 015, Nr. 441 (M-1177), 11. November 1991 (1991-11-11) & JP 03 186642 A (NISSAN DIESEL MOTOR CO LTD), 14. August 1991 (1991-08-14)
- PATENT ABSTRACTS OF JAPAN Bd. 007, Nr. 227 (M-248), 7. Oktober 1983 (1983-10-07) -& JP 58 121344 A (TOYOTA JIDOSHA KOGYO KK), 19. Juli 1983 (1983-07-19)
- PATENT ABSTRACTS OF JAPAN Bd. 018, Nr. 550 (M-1690), 20. Oktober 1994 (1994-10-20) & JP 06 193695 A (NTN CORP), 15. Juli 1994 (1994-07-15)

## Beschreibung

### Gebiet der Erfindung

Die Erfindung bezieht sich auf eine Spannvorrichtung für einen mit einem Elastriemen versehenen Zugmitteltrieb bzw. für Zugmitteltriebe mit einer relativ geringen Dämpfung, mit einem durch eine Druckschraubenfeder belasteten, eine Umlenkrolle aufweisenden Umlenkrollenhebel, auf dem die Umlenkrolle zur Aufnahme des Riemens drehbar gelagert ist.

### Hintergrund der Erfindung

Derartige Spannvorrichtungen für Zugmitteltriebe sind in unterschiedlichen Ausführungsformen bekannt. Sie dienen dem Spannen eines Riemens, beispielsweise eines Elastriemens zum Antreiben von verschiedenen Aggregaten an einem Motorblock eines Kraftfahrzeuges. Aus der DE 40 39815 C1 ist eine Spannvorrichtung mit den Merkmalen des Oberbegriffes des Anspruchs 1 bekannt. Aus der DE 38 25 065 C2 ist eine Spannvorrichtung für Riemen, Ketten oder dergleichen bekannt, die als Spannelement eine Druck- bzw. Zugfeder aufweist. Die Spannvorrichtung umfasst einen Spannarm und einen Tragarm zur Verbindung mit einer Spannrolle, wobei der Spann- bzw. Tragarm mittels eines regelmäßigen Mehrkantzapfens lösbar in verschiedenen Stellungen zueinander in drehfeste Verbindung bringbar ist. Die Spannvorrichtung lagert drehbeweglich auf dem Zapfen, der an einer Basis gehalten ist, an der auch das Spannelement angreift. Nachteilig hierbei sind die starr vorgegebenen Stellungen des Spannarms relativ zu dem die Spannrolle haltenden Tragarm, so dass nur ein gestuftes Spannen des Riemens möglich ist.

Weiterhin zeigt die DE 195 01 685 C1 einen Riemenspanner mit einem durch eine Schraubenfeder beaufschlagten, um eine ortsfeste Achse verschwenkbaren Spannhebel, auf dem eine Riemenscheibe für die Anlage gegen einen zu spannenden Riemen drehbar gelagert ist. Dabei ist die Schraubenfeder mit ihrem einen Ende am Spannhebel und mit ihrem anderen Ende an einem gehäusefest anbringbaren Stützelement zur Gewährleistung von Schwenkbewegungen des Spannhebels sowohl längs als auch quer zur Schraubenfederlängsachse deformierbar gehaltert. Ferner weist der Riemenspanner eine die maximale Spannverschwenkung des Spannhebels festlegende Federwegbegrenzungseinrichtung auf, indem ein flexibles, auf Zug beanspruchbares, als Federband ausgebildetes Verbindungselement zwischen dem Stützelement und dem Spannhebel angeordnet ist. Dieser Riemenspanner ist sehr instabil ausgebildet, da die Schraubenfeder auch in radialer Richtung verschwenkbar ist. Daher treten an der Schraubenfeder hohe Spannungen und Resonanzen auf, die wiederum zum Federbruch führen können. Darüber hinaus kann das Federband schnell verschleißen.

Die DE 197 10 227 A1 offenbart eine Riemenspannvorrichtung, die eine mit einem Spannhebel mit Riemenspannrolle in Wirkverbindung stehende Federbeineinrichtung mit einer ersten Feder aufweist. Diese Federbeineinrichtung ist als dynamischer Dämpfer mit Zylinder und Kolbenstange ausgebildet. Eine zweite Feder ist zwischen einem ortsfesten Federlager und dem Zylinder vorgespannt gehalten. Die Federn weisen eine unterschiedliche Dämpfungskraft auf. Die Ausbildung der Riemenspannvorrichtung ist durch den dynamischen Dämpfer konstruktiv sehr aufwändig und teuer.

Schließlich zeigt die DE 38 52 081 T2 eine Riemenspannvorrichtung mit zunehmend gekrümmter Bewegungsbahn, wobei eine feste Riemenspannrolle einen drehbar darin gelagerten Ring umschließt. Dieser Ring ist durch eine gestellfeste Schraubenfeder belastet. Diese Riemenspannvorrichtung ist kompliziert gestaltet und somit sehr kostenaufwändig zu realisieren.

### Aufgabe der Erfindung

Der Erfindung liegt die Aufgabe zu Grunde, eine Spannvorrichtung für einen mit einem Elastriemen versehenen Zugmitteltrieb bzw. für Zugmitteltriebe mit einer relativ geringen Dämpfung zu schaffen, die preiswert zu realisieren ist und dennoch einen sicheren Betrieb ermöglicht.

### Zusammenfassung der Erfindung

Der Erfindung liegt die Erkenntnis zu Grunde, dass eine Kraftverlagerung an den Hebelbauleilen der Riemenspannvorrichtung einen gedämpften Spannvorgang des Zugmitteltriebes ermöglicht. Insofern ist die Erfindung vor allem für Riementriebe geeignet, die durch geringe Ungleichförmigkeiten sehr ruhig laufen und damit kaum bzw. nicht weiter gedämpft werden müssen.

Die Erfindung betrifft gemäß Anspruch 1 demnach eine Spannvorrichtung für einen mit einem Elastriemen versehenen Zugmitteltrieb, mit einem durch eine Druckschraubenfeder belasteten und eine Umlenkrolle aufweisenden Umlenkrollenhebel, auf dem die Umlenkrolle zur Aufnahme des Riemens drehbar gelagert ist. Zur Lösung der gestellten Aufgabe ist zudem vorgesehen, dass die Schraubenfeder zur axialen Verschiebung endseitig in einer Halterung ruht, die schwenkbeweglich mit dem gehäusefest an einer Basis befestigten Umlenkrollenhebel verbunden ist, wobei die Schraubenfeder mit ihrem umlenkrollenfernen Ende an einer Basis befestigt ist.

Somit ist bei dieser Spannvorrichtung für einen mit einem Elastriemen versehenen Zugmitteltrieb bzw. für Zugmitteltriebe mit einer relativ geringen Dämpfung, einerseits der Umlenkrollenhebel an einer Basis und andererseits die Druckschraubenfeder an einer Basis befestigt, wobei die Basis beispielsweise ein Motorblock sein kann.

Die Unteransprüche beschreiben bevorzugte Weiterbildungen oder Ausgestaltungen der Erfindung.

Um einen günstigen Kraftumgriff zwischen der die Schraubenfeder aufnehmenden Halterung und dem die Umlenkrolle haltenden Umlenkrollenhebel zu erreichen, ist der Umlenkrollenhebel winkelig mit wenigstens zwei Hebelarmen und vorzugsweise einstückig ausgebildet.

Erfindungsgemäß ist vorgesehen, dass das umlenkrollennahe Ende der Schraubenfeder mit einem Zuganker verbunden ist, der durch den von die Schraubenfeder gebildeten Hohlraum sowie durch das umlenkrollenferne Ende der Halterung geführt ist.

Nach einer weiteren Ausgestaltung der erfindungsgemäßen Spannvorrichtung ist der Zuganker am umlenkrollenfernen Ende hakenförmig ausgebildet und mit diesem Ende an einer Basis befestigbar. Diese zweitgenannte Basis ist bevorzugt identisch mit der im Zusammenhang mit Anspruch 1 erstgenannten Basis. Dadurch wird eine translatorische, also axiale Bewegbarkeit der Schraubenfeder relativ zu deren Halterung beim Spannvorgang der Umlenkrolle erreicht.

Des Weiteren muss gewährleistet sein, dass während des Spannvorganges der Spannvorrichtung die Schraubenfeder in der Halterung nicht verklemmt bzw. seitlich ausbeult. Zu diesem Zweck steht erfindungsgemäß der Zuganker am umlenkrollennahen Ende mit einem Dom in Wirkverbindung, der sich in den Hohlraum der Schraubenfeder erstreckt. Der Dom selbst ist bevorzugt Bestandteil der Halterung; er ist jedoch zumindest mit dieser verbunden.

Ferner kann das umlenkrollennahe Ende der Schraubenfeder in einer Ausbuchtung der Halterung ruhen, um ein Herausrutschen der Schraubenfeder aus der Halterung während des Spannvorganges der Umlenkrolle zu verhindern.

Gemäß einer anderen Weiterbildung der Spannvorrichtung ist die Halterung mit dem Umlenkrollenhebel rotatorisch beweglich verschraubt. Dabei kann zwischen der Halterung und dem Umlenkrollenhebel eine Gleitbuchse, beispielsweise aus Kunststoff, angeordnet sein. Diese ermöglicht einerseits die Leichtgängigkeit der Bewegung zwischen der Halterung und dem Umlenkrollenhebel und andererseits ein Mindestmaß an Dämpfung der Spannvorrichtung.

Die Dämpfung kann durch eine Variation des Materials und damit des Reibkoeffizienten beeinflusst werden. Ferner ist die Dämpfung durch die Ausrichtung der Kraft an der Spannrolle und.des Federelementes beeinflussbar.

Die Dämpfung der Spannvorrichtung kann noch dadurch unterstützt werden, dass der Umlenkrollenhebel über ein Lager, beispielsweise ein Gleitlager, eine Buchse, eine Verschraubung oder dergleichen gehäusefest an der Basis befestigt ist, wobei eine gewünschte Reibung erzeugt wird.

### Kurze Beschreibung der Zeichnungen

Die Erfindung wird im Folgenden anhand der beiliegenden Zeichnungen an einem Ausführungsbeispiel näher erläutert. Darin zeigt
- Fig. 1: eine erfindungsgemäße Spannvorrichtung für einen mit einem E- lastriemen versehenen Zugmitteltrieb,
- Fig. 2: eine andere Seitenansicht eines Bereiches der Spannvorrichtung gemäß Fig. 1, und
- Fig. 3: eine Ansicht einzelner Teile der Spannvorrichtung gemäß Fig. 2.

### Detaillierte Beschreibung der Zeichnungen

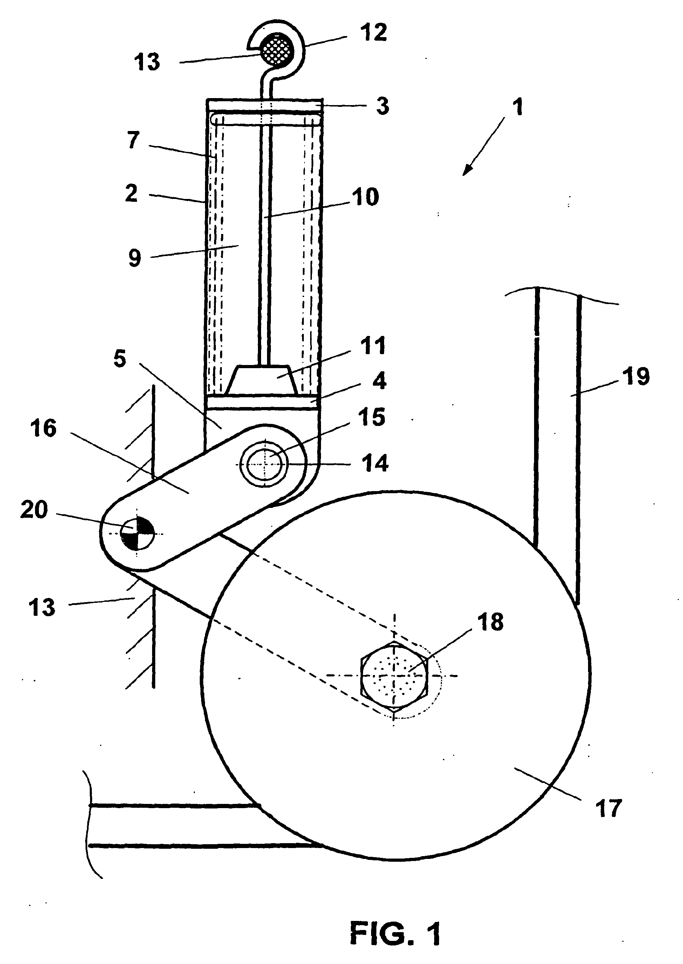

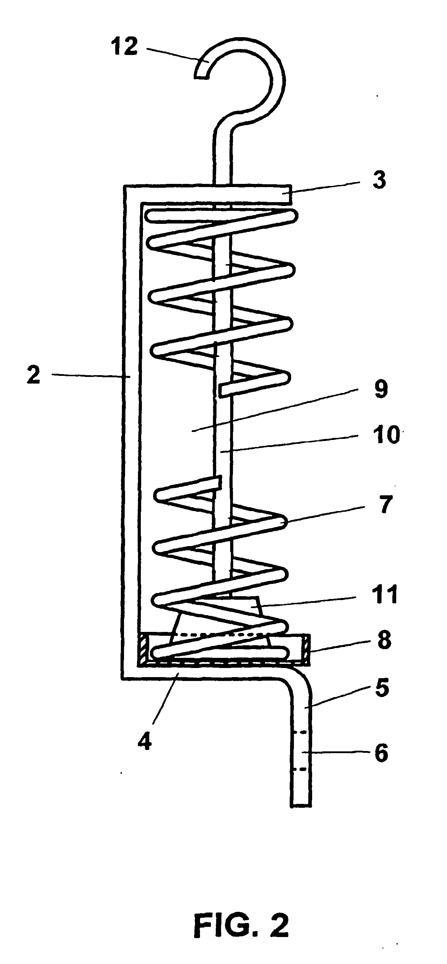

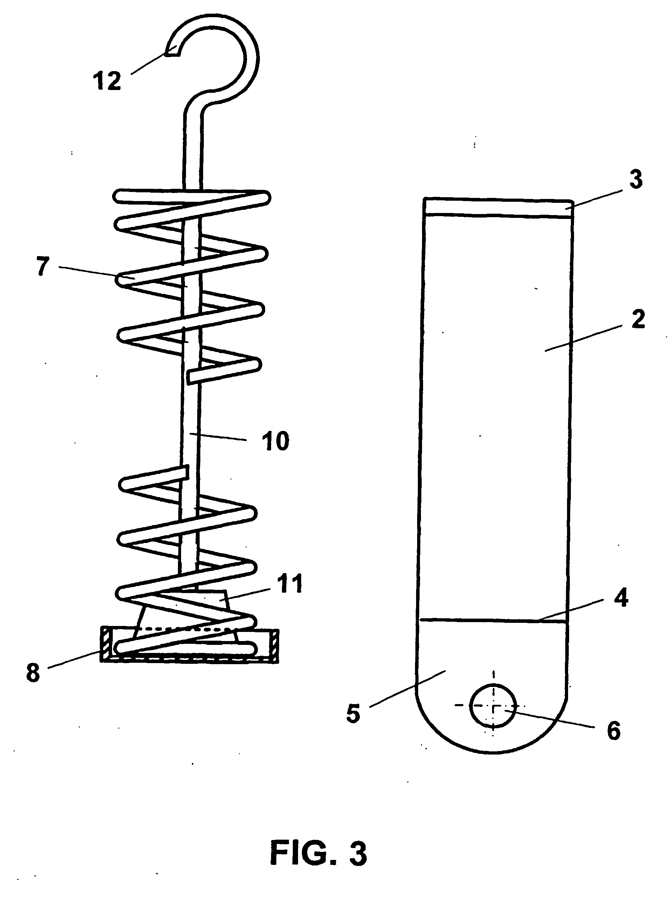

Die in Fig. 1 dargestellte Spannvorrichtung 1 weist eine Halterung 2 auf, die in den Figuren 2 und 3 in zwei verschiedenen Ansichten gezeigt ist. Die Halterung 2 besteht hier aus einem gebogenen Blech und besitzt endseitig jeweils einen abgewinkelten Steg 3 und 4, wobei sich am unteren Steg 4 eine abgewinkelte Lasche 5 anschließt, die eine Bohrung 6 zur Aufnahme eines Lagers aufweist.

Die Halterung 2 nimmt eine auf Druck beanspruchbare Schraubenfeder 7 auf. Zu diesem Zweck besitzt die Halterung 2 am Steg 4 eine Ausbuchtung 8, in der das untere Ende der Schraubenfeder 7 spannrollennah ruht. Diese Ausbuchtung 8 verhindert ein Herausrutschen der Schraubenfeder 7 aus der Halterung 2 während des Spannvorganges der Spannvorrichtung 1. Wie weiterhin insbesondere aus den Figuren 2 und 3 ersichtlich ist, führt durch den Hohlraum 9 der Schraubenfeder 7 ein Zuganker 10, der am unteren Ende mit einem kegelstumpfartigen Dom 11 verbunden ist. Der Dom 11 zentriert die Schraubenfeder 7 in der Halterung 2 und ist beispielsweise am Steg 4 oder an der Ausbuchtung 8 ausgebildet. Das obere Ende des Zugankers 10 führt aus dem Hohlraum 9 der Schraubenfeder 7 durch den Steg 3 der Halterung 2 und bildet dann einen Haken 12, der an einer Basis 13, beispielsweise einem Motorblock eines Kraftfahrzeuges, befestigt ist.

Gemäß Fig. 1 ist die Lasche 5 der Halterung 2 mit einer Gleitbuchse 14 versehen, in der eine Schraubverbindung 15 eingebracht ist. Diese verbindet die Lasche 5 der Halterung 2 mit einem winkeligen und einstückigen Umlenkrollenhebel 16, dessen anderer Schenkel eine drehbewegliche Umlenkrolle 17 trägt, die mittels einer drehgelagerten Schraubverbindung 18 am Umlenkrollenhebel 16 befestigt ist. Um die Umlenkrolle 17 läuft über einen Teilumfangsbereich ein zu spannender Elastriemen 19, der seinerseits mit weiteren, nicht dargestellten Aggregaten verbunden ist bzw. diese zumindest teilweise umschlingt.

Des Weiteren weist der Umlenkrollenhebel 16 im Schnittpunkt seiner beiden Schenkel ein Lager 20 auf, über welches dieser gehäusefest mit der Basis 13 verbunden ist.

Während des Spannvorganges der Spanneinrichtung 1 reduziert das Zugmittel den Druck gegen die Umlenkrolle 17, die wiederum den Umlenkrollenhebel 16 um das Lager 20 verschwenkt. Der Umlenkrollenhebel 16 bewirkt die Mitnahme der Halterung 2, so dass die Schraubenfeder 7, die an ihrem umlenkrollenfernen Ende über den Haken 12 des Zugankers 10 an der Basis 13 befestigt ist, auf Druck beansprucht und somit zusammengedrückt wird. Der von der Schraubenfeder 7 erzeugte Gegendruck wirkt wiederum auf umgekehrtem Wege auf die Umlenkrolle 17, die nun wieder den Elastriemen 19 spannt, wenn dies notwendig ist.

### Bezugszeichenliste

- 1: Spannvorrichtung
- 2: Halterung
- 3: Steg
- 4: Steg
- 5: Lasche
- 6: Bohrung
- 7: Schraubenfeder
- 8: Ausbuchtung
- 9: Hohlraum
- 10: Zuganker
- 11: Dom
- 12: Haken
- 13: Basis
- 14: Gleitbuchse
- 15: Schraubverbindung
- 16: Umlenkrollenhebel
- 17: Umlenkrolle
- 18: Schraubverbindung
- 19: Elastriemen
- 20: Lager

## Patentansprüche

1. Spannvorrichtung (1) für einen mit einem Elastriemen (19) versehenen Zugmitteltrieb, mit einem durch eine Druckschraubenfeder (7) belasteten, eine Umlenkrolle (17) aufweisenden Umlenkrollenhebel (16), auf dem die Umlenkrolle (17) zur Aufnahme des Riemens (19) drehbar gelagert ist, wobei die Druckschraubenfeder (7) zur axialen Verschiebung endseitig in einer Halterung (2) ruht, wobei die Halterung (2) schwenkbeweglich mit dem gehäusefest an einer Basis (13) befestigten Umlenkrollenhebel (16) verbunden ist, wobei die Druckschraubenfeder (7) mit ihrem umlenkrollenfernen Ende an der Basis (13) befestigt ist, und bei der das umlenkrollennahe Ende der Druckschraubenfeder (7) mit einem Zuganker (10) verbunden ist, welcher durch den von der Schraubenfeder (7) gebildeten Hohlraum (9) und durch das umlenkrollenfeme Ende ( 3) der Halterung (2) geführt ist, **dadurch gekennzeichnet, dass** der Zuganker (10) am umlenkrollennahen Ende mit einem Dom (11) in Wirkverbindung steht, der sich in den Hohlraum (9) der Druckschraubenfeder (7) erstreckt und an einem Umlenkrollennahen Steg (4) der Halterung (2) ausgebildet oder befestigt ist.

2. Spannvorrichtung nach Anspruch 1, **dadurch gekennzeichnet, dass** der Zuganker (10) am umlenkrollenfernen Ende hakenförmig ausgebildet und mit diesem Haken (12) an der Basis (13) befestigbar ist.

3. Spannvorrichtung nach Anspruch 1 oder 2, **dadurch gekennzeichnet, dass** das umlenkrollennahe Ende der Schraubenfeder (7) in einer Ausbuchtung (8) der Halterung (2) ruht.

4. Spannvorrichtung nach einem der Ansprüche 1 bis 3, **dadurch gekennzeichnet, dass** der Umlenkrollenhebel (16) wenigstens zwei Hebelarme aufweist, die unter einem Winkel zueinander stehen.

## Claims

1. Tensioning device (1) for atraction drive provided with an elastomeric belt (19), with a deflecting-pulley lever (16) which is loaded by a helical compression spring (7) and has a deflecting pulley (17) and on which the deflecting pulley (17) for receiving the belt (19) is mounted rotatably, the helical compression spring (7) resting on the end face in a holder (2) for axial displacement, the holder (2) being connected pivotably moveably to the deflecting-pulley lever (16) fastened to a base (13) fixedly with respect to a housing, the helical compression spring (7) being fastened with its end remote from the deflecting pulley to the base (13), and that end of the helical compression spring (7) which is near to the deflecting pulley being connected to a tie rod (10) which is led through the cavity (9) formed by the helical spring (7) and through that end (3) of the holder (2) which is remote from the deflecting pulley, **characterized in that** the tie rod (10) is operatively connected at the end near to the deflecting pulley to a dome (11) which extends in the cavity (9) of the helical compression spring (7) and which is formed on or fastened to a web (4), near to the deflecting pulley, of the holder (2).

2. Tensioning device according to Claim 1, **characterized in that** the tie rod (10) is of hook-shaped design at the end remote from the deflecting pulley and can be fastened with this hook (12) to the base (13).

3. Tensioning device according to Claim 1 or 2, **characterized in that that** end of the helical spring (7) which is near to the deflecting pulley rests in a protuberance (8) of the holder (2).

4. Tensioning device according to one of Claims 1 to 3, **characterized in that** the deflecting-pulley lever (16) has at least two lever arms which are at an angle to one another.

## Revendications

1. Dispositif tendeur (1) pour un entraînement par élément de traction muni d'une courroie élastique (19), comprenant un levier de poulie de renvoi (16) sollicité par un ressort à boudin de compression (7), présentant une poulie de renvoi (17), sur lequel est montée à rotation la poulie de renvoi (17) pour recevoir la courroie (19), le ressort à boudin de compression (7) reposant du côté de son extrémité dans un dispositif de fixation (2) en vue d'un déplacement axial, le dispositif de fixation (2) étant connecté par pivotement au levier de poulie de renvoi (16) fixé sur une base (13) de manière solidaire du boîtier, le ressort à boudin de compression (7) étant fixé avec son extrémité éloignée de la poulie de renvoi à la base (13), et l'extrémité proche de la poulie de renvoi du ressort à boudin de compression (7) étant connectée à un tirant (10) qui est guidé à travers la cavité (9) formée par le ressort à boudin (7) et à travers l'extrémité (3) éloignée de la poulie de renvoi du dispositif de fixation (2), **caractérisé en ce que** le tirant (10) est en liaison fonctionnelle à l'extrémité proche de la poulie de renvoi avec un dôme (11) qui s'étend dans la cavité (9) du ressort à boudin de compression (7) et qui est réalisé ou fixé sur une nervure (4) proche de la poulie de renvoi du dispositif de fixation (2).

2. Dispositif tendeur selon la revendication 1, **caractérisé en ce que** le tirant (10) est réalisé en forme de crochet à l'extrémité éloignée de la poulie de renvoi, et peut être fixé avec ce crochet (12) à la base (13).

3. Dispositif tendeur selon la revendication 1 ou 2, **caractérisé en ce que** l'extrémité proche de la poulie de renvoi du ressort à boudin (7) repose dans un renflement (8) du dispositif de fixation (2).

4. Dispositif tendeur selon l'une quelconque des revendications 1 à 3, **caractérisé en ce que** le levier de poulie de renvoi (16) présente au moins deux bras de levier qui sont orientés suivant un angle l'un par rapport à l'autre.
